# EUROPEAN PATENT APPLICATION

(11) **EP 3 309 445 A1**
(43) Date of publication of application: **18.04.2018**
(21) Application number: 16193240.5
(22) Date of filing: 11.10.2016
(51) Int. Cl.: F21S 8/08, F21S 9/03, F21V 21/28

(54) **SOLAR-POWERED STREETLAMP STRUCTURE**

(71) Applicant: Habemit International Co. Ltd., Taoyuan City 324 (TW)
(72) Inventor: WANG, Chin-Wen, Taoyuan City 324 (TW); WANG, Tzu, Taoyuan City 324 (TW)
(74) Representative: Dantz, Jan Henning

(57) **Abstract**

A solar-powered streetlamp structure (10) includes: a main lamp frame (1), including a top section (11) and a first pivotal hole (12); a solar power module (2), disposed on the top section (11); a rotation unit (3), including a transversal pipe (31) pivoted in the first pivotal hole (12) and an outwardly-protruding pipe (32) connected to the transversal pipe (31), thereby enabling the angle of the outwardly-protruding pipe (32) to be adjusted with the transversal pipe (31) served as an axle core; and a lamp unit (4), including a lamp body (41) having one end thereof formed with a second pivotal hole (410), and a light source module (42); the lamp body (41) is pivoted with the outwardly-protruding pipe (32) via the second pivotal hole (410), thereby enabling the angle of the lamp body (41) to be adjusted with the outwardly-protruding pipe (32) served as an axle core.

## Description

### BACKGROUND OF THE INVENTION

### Field of the Invention

The present invention relates to an illumination structure, especially to a solar-powered streetlamp structure.

### Description of Related Art

A conventional streetlamp structure mainly includes a lamppost and a lamp unit, one end of the lamppost is mounted in a road and the other end thereof is connected to the lamp unit, because the connecting location of the lamppost and the lamp unit is fixed and unable to be moved or rotated, the lamp unit can only be used for illuminating in a certain area and the angle thereof cannot be adjusted according to actual needs.

However, at least one light emitting diode (LED) is adopted as a light source for the above-mentioned lamp unit, because the projection efficiency of light emitting diode is low, the fixed illumination area of the lamp unit may be smaller, so that the fixed illumination area has to be more effectively adjusted for providing illumination to a desired area. As such, how to design a streetlamp structure allowing the connecting location of the lamppost and the lamp unit to be moveable and rotatable for adjusting the angle of the lamp unit so as to alter the fixed illumination area shall be seriously concerned by skilled people in the art.

Accordingly, the applicant of the present invention has devoted himself for improving the mentioned disadvantages.

### SUMMARY OF THE INVENTION

The present invention is to provide a solar-powered streetlamp structure, in which the angle of an outwardly-protruding pipe is able to be adjusted with a transversal pipe served as an axle core, the angle of a lamp body is able to be adjusted with the outwardly-protruding pipe served as an axle core, so that the solar-powered streetlamp structure is provided with advantages of dual-staged angle adjustment and illumination area adjustment, thereby increasing the illumination efficiency of the solar-powered streetlamp structure.

Accordingly, the present invention provides a solar-powered streetlamp structure, which comprises: a main lamp frame, including a top section and formed with a first pivotal hole; a solar power module, disposed on the top section; a rotation unit, including a transversal pipe and an outwardly-protruding pipe, the transversal pipe is pivoted in the first pivotal hole, the outwardly-protruding pipe is connected to the transversal pipe, thereby enabling the angle of the outwardly-protruding pipe to be adjusted with the transversal pipe served as an axle core; and a lamp unit, including a lamp body and a light source module, wherein one end of the lamp body is formed with a second pivotal hole, another end thereof is disposed with the light source module, the lamp body is pivoted with the outwardly-protruding pipe via the second pivotal hole, thereby enabling the angle of the lamp body to be adjusted with the outwardly-protruding pipe served as an axle core.

### BRIEF DESCRIPTION OF DRAWING

FIG. 1 a perspective exploded view showing a solar-powered streetlamp structure according to the present invention;
FIG. 2 is another perspective exploded view showing the solar-powered streetlamp structure according to the present invention;
FIG. 3 is a perspective view showing the assembly of the solar-powered streetlamp structure according to the present invention;
FIG. 4 is another perspective view showing the assembly of the solar-powered streetlamp structure according to the present invention;
FIG. 5 is a cross sectional view showing the solar-powered streetlamp structure according to the present invention;
FIG. 6 is another cross sectional view showing the solar-powered streetlamp structure according to the present invention;
FIG. 7 is a schematic view showing an operating status of the solar-powered streetlamp structure according to the present invention;
FIG. 8 is a schematic view showing another operating status of the solar-powered streetlamp structure according to the present invention; and
FIG. 9 is a schematic view showing one another operating status of the solar-powered streetlamp structure according to the present invention.

### DETAILED DESCRIPTION OF THE INVENTION

A preferred embodiment of the present invention will be described with reference to the drawings.

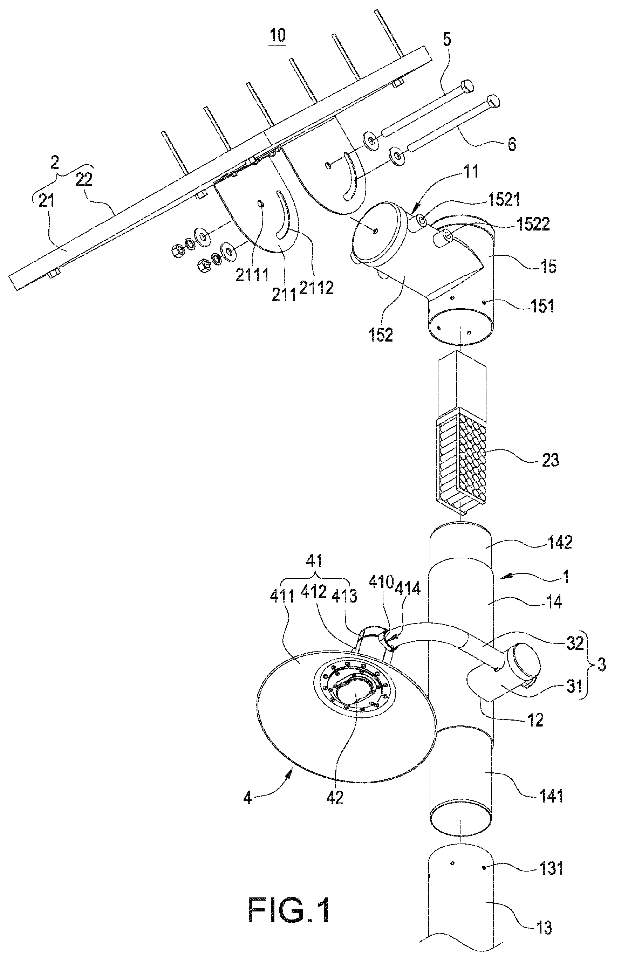

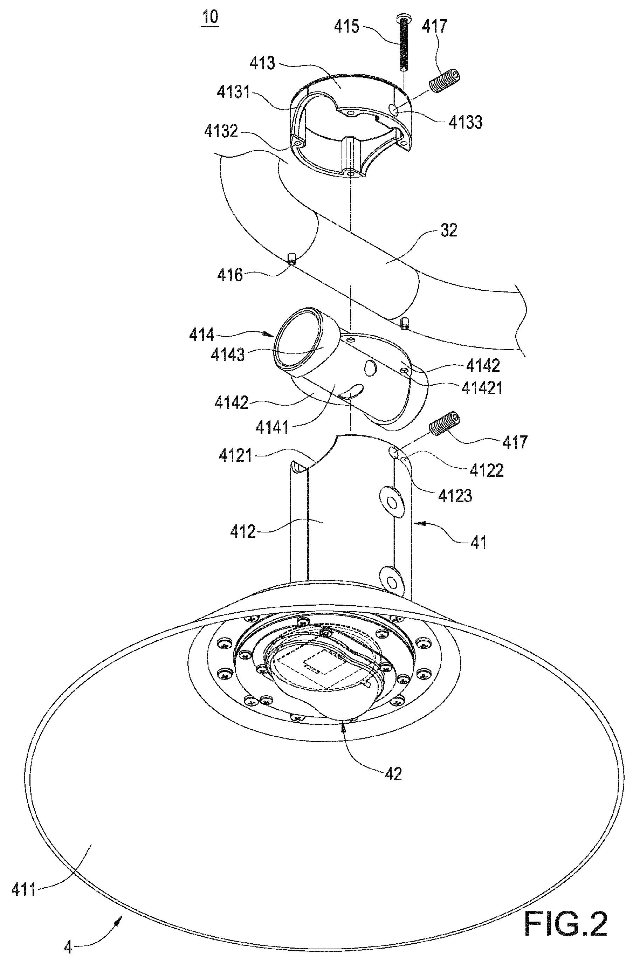

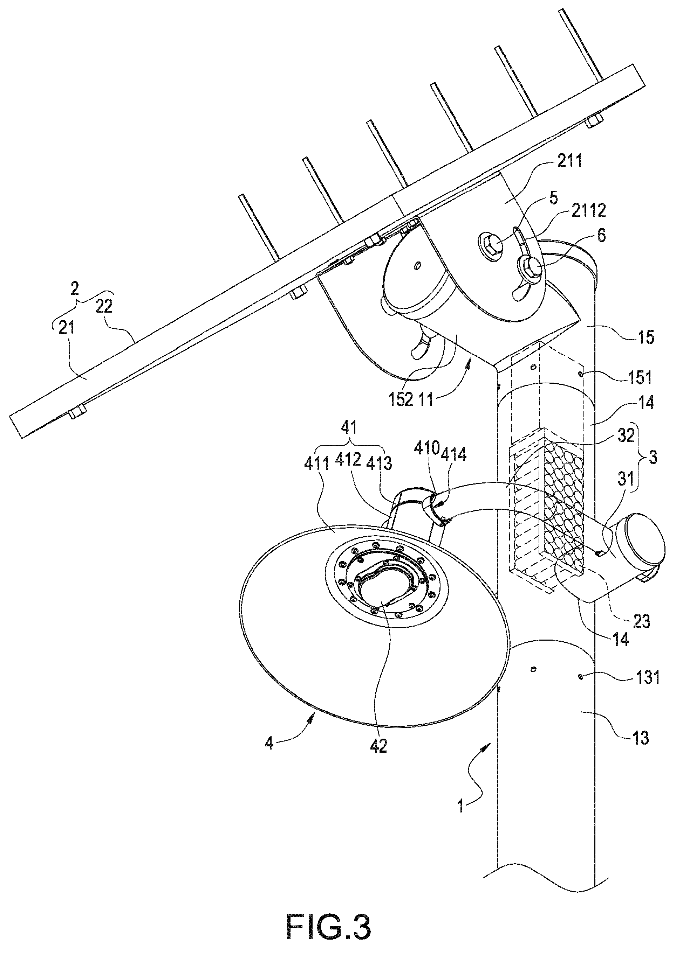

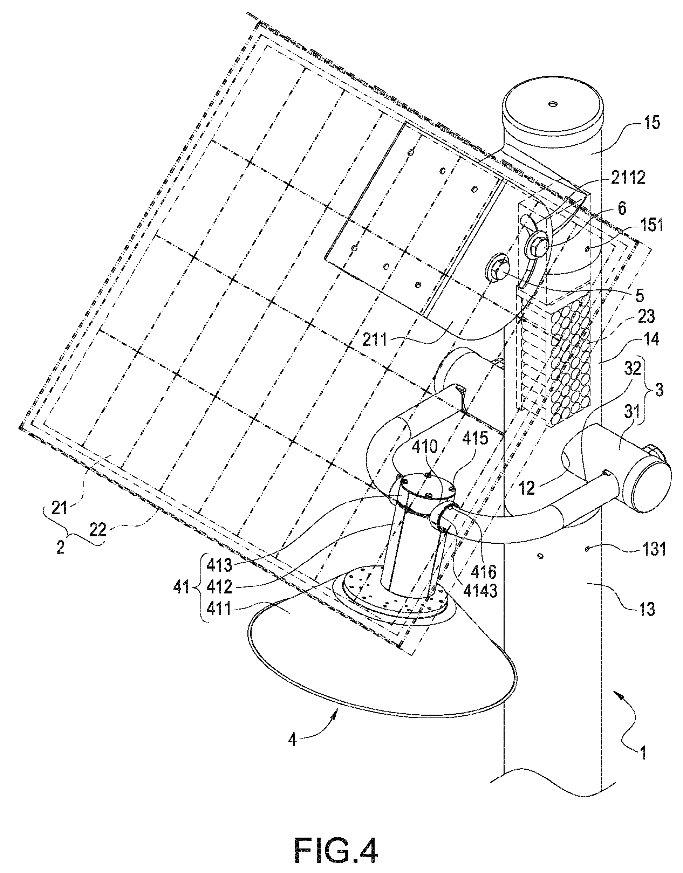

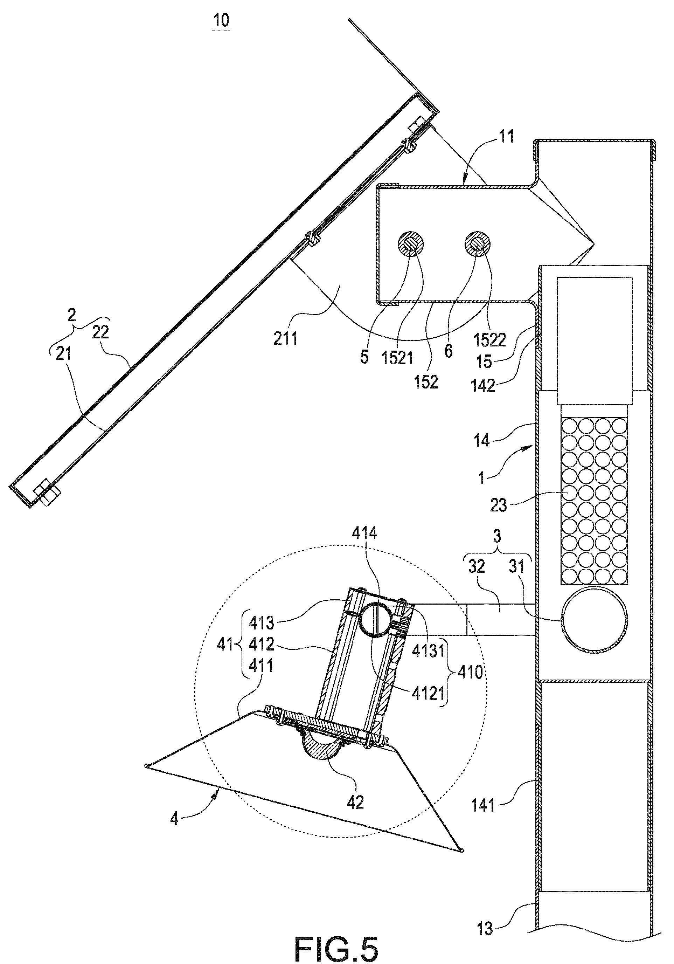

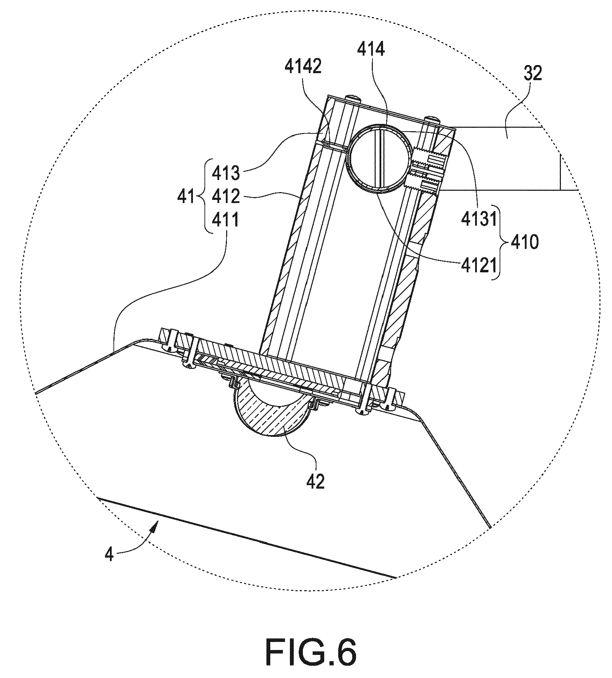

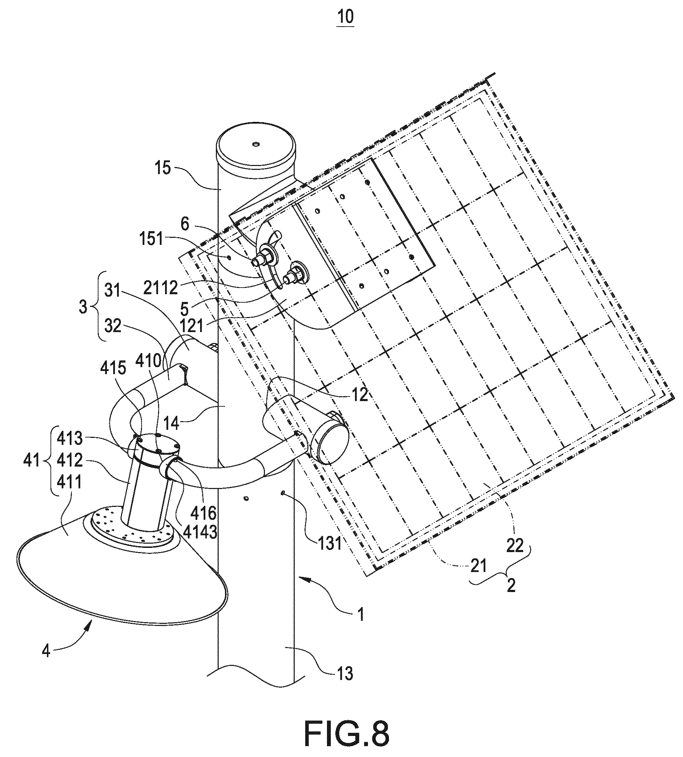

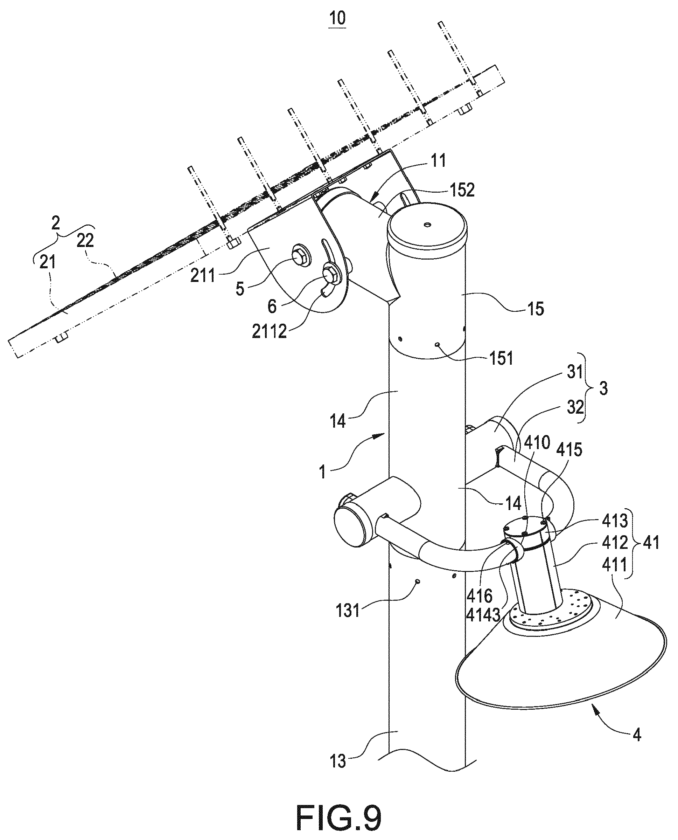

Please refer from FIG. 1 to FIG. 9, the present invention provides a solar-powered streetlamp structure 10 mainly comprising a main lamp frame 1, a solar power module 2, a rotation unit 3 and a lamp unit 4.

As shown from FIG. 1 to FIG. 6, the main lamp frame 1 includes a top section 11 and is formed with a first pivotal hole 12. Details are provided as follows: the main lamp frame 1 includes a fixed rod 13, a first rotary pipe 14 and a second rotary pipe 15, two ends of the first rotary pipe 14 are respectively extended with a first receiving end 141 and a second receiving end 142, the first receiving end 141 is received in the fixed rod 13 and capable of being rotated relative to the fixed rod 13, the second rotary pipe 15 is received in the second receiving end 142 and capable of being rotated relative to the first rotary pipe 14, the first pivotal hole 12 is formed on the first rotary pipe 14, and the top section 11 is formed on the second rotary pipe 15.

In addition, the fixed rod 13 is formed with a plurality of first penetrated holes 131 corresponding to the first receiving end 141, so that when the first rotary pipe 14 is rotated relative to the fixed rod 13, air generated due to the friction between the first rotary pipe 14 and the fixed rod 13 is able to be discharged via the first penetrated holes 131, thereby allowing the first rotary pipe 14 to be rotated in a relatively smoother manner relative to the fixed rod 13; the second rotary pipe 15 is formed with a plurality of second penetrated holes 151 corresponding to the second receiving end 142, so that when the second rotary pipe 15 is rotated relative to the first rotary pipe 14, air generated due to the friction between the second rotary pipe 15 and the first rotary pipe 14 is able to be discharged via the second penetrated holes 151, thereby allowing the second rotary pipe 15 to be rotated in a relatively smoother manner relative to the first rotary pipe 14.

Moreover, the top section 11 includes an extension pipe 152 protruded from the second rotary pipe 15, and the extension pipe 152 is formed with a first lock hole 1521 and a second lock hole 1522.

As shown in FIG. 1, and FIG. 3 to FIG. 5, the solar power module 2 is disposed on the top section 11 and includes a carrying rack 21, a solar panel 22 and a storage cell 23, the carrying rack 21 is disposed on the top section 11, the solar panel 22 is fastened on the carrying rack 21, the storage cell 23 is disposed inside the first rotary pipe 14 or the second rotary pipe 15, and the storage cell 23 is electrically connected to the solar panel 22 and a light source module 42.

Details are provided as follows: the carrying rack 21 includes two fastening sheets 211 disposed at two sides of the extension pipe 152, and the fastening sheet 211 is formed with a third lock hole 2111 and an arc-shaped elongated hole 2112.

As shown from FIG. 1 to FIG. 6, the rotation unit 3 includes a transversal pipe 31 and an outwardly-protruding pipe 32, the transversal pipe 31 is pivoted in the first pivotal hole 12, the outwardly-protruding pipe 32 is connected to the transversal pipe 31, thereby enabling the angle of the outwardly-protruding pipe 32 to be adjusted with the transversal pipe 31 served as an axle core.

Wherein, according to this embodiment, the outwardly-protruding pipe 32 is formed as a U-shaped pipe, two ends of the outwardly-protruding pipe 32 are respectively fastened with two ends of the transversal pipe 31, the shape of the outwardly-protruding pipe 32 is formed in a cylindrical status, what shall be addressed is that the appearance of the outwardly-protruding pipe 32 is not limited to the above-mentioned arrangement and can be altered according to actual needs.

As shown from FIG. 1 to FIG. 6, the lamp unit 4 includes a lamp body 41 and the above-mentioned light source module 42, one end of the lamp body 41 is formed with a second pivotal hole 410, another end thereof is disposed with the light source module 42, the lamp body 41 is pivoted with the outwardly-protruding pipe 32 via the second pivotal hole 410, thereby enabling the angle of the lamp body 41 to be adjusted with the outwardly-protruding pipe 32 served as an axle core.

Details are provided as follows: the lamp body 41 includes a lamp seat 411, a first clamping member 412 and a second clamping member 413, one end of the first clamping member 412 is connected to the lamp seat 411, another end thereof is formed with a first recess 4121, one end of the second clamping member 413 is formed with a second recess 4131, the second pivotal hole 410 is defined by the first recess 4121 and the second recess 4131, so that the outwardly-protruding pipe 32 is clamped between an inner wall of the first recess 4121 and an inner wall of the second recess 4131, and the light source module 42 is disposed in the lamp seat 411.

In addition, the lamp body 41 further includes a non-skid sleeve 414 disposed between the first clamping member 412, the second clamping member 413 and the outwardly-protruding pipe 32, the non-skid sleeve 414 is formed with a concave slot 4141 and includes two protruding sheets 4142 and two annular convex segments 4143, the two protruding sheets 4142 are formed through being extended from two sides defined on a bottom wall of the concave slot 4141, the two annular convex segments 4143 are formed at the left and the right sides of the non-skid sleeve 414, the first clamping member 412 and the second clamping member 413 are both mounted in the concave slot 4141, the two protruding sheets 4142 are clamped between the first clamping member 412 and the second clamping member 413, and the two annular convex segments 4143 are exposed at the exteriors of the first clamping member 412 and the second clamping member 413.

Wherein, the non-skid sleeve 414 is made of silicon or rubber for increasing the friction force between the first clamping member 412, the second clamping member 413 and the outwardly-protruding pipe 32.

Moreover, the lamp body 41 further includes a plurality of screws 415, the first clamping member 412 is formed with a plurality of first through holes 4122, the second clamping member 413 is formed with a plurality of second through holes 4132, the protruding sheet 4142 is formed with a plurality of third through holes 41421, and the screws 415 are screwed in the first through holes 4122, the second through holes 4132 and the third through holes 41421. As such, when the screws 415 are loosened, the relative clamping locations of the first clamping member 412, the second clamping member 413 and the outwardly-protruding pipe 32 can be adjusted, so that the solar-powered streetlamp structure 10 is provided with an advantage of adjusting the illumination angle.

Furthermore, the lamp body 41 further includes two insertion pins 416 and two abutting screw rods 417, the two insertion pins 416 are inserted in the outwardly-protruding pipe 32 and positioned corresponding to the outer sides of the two annular convex segments 4143; the first clamping member 412 is formed with a first screw hole 4123 corresponding to the non-skid sleeve 414, the second clamping member 413 is formed with a second screw hole 4133 corresponding to the non-skid sleeve 414, one of the abutting screw rods 417 is screwed in the first screw hole 4123, the other abutting screw rod 417 is screwed in the second screw hole 4133, and the bottom ends of the abutting screw rods 417 are abutted against the non-skid sleeve 414, so that the location of the non-skid sleeve 414 can be restrained and positioned via the two insertion pins 416 and the two abutting screw rods 417.

Moreover, according to this embodiment, the shape of the first recess 4121 and that of the second recess 4131 are respectively formed in a semi-circular status in order to match with the shape of the outwardly-protruding pipe 32, the shape of the non-skid sleeve 414 is formed in a tubular status in order to match with the shape of the outwardly-protruding pipe 32, and the protruding sheet 4142 is formed in a semi-arced status, what shall be addressed is that the shapes of the first recess 4121, the second recess 4131, the outwardly-protruding pipe 32 and the protruding sheet 4142 are not limited to the above-mentioned arrangement and can be altered according to actual needs.

As shown from FIG. 1 to FIG. 6, the solar-powered streetlamp structure 10 provided by the present invention further includes a first screwing member 5 and a second screwing member 6, the first screwing member 5 is screwed in the first lock hole 1521 and the third lock holes 2111, the second screwing member 6 is screwed in the second lock hole 1522 and the two arc-shaped elongated holes 2112, thereby enabling the angle of the carrying rack 21 to be adjusted via the two arc-shaped elongated holes 2112 with the first screwing member 5 served as an axle core.

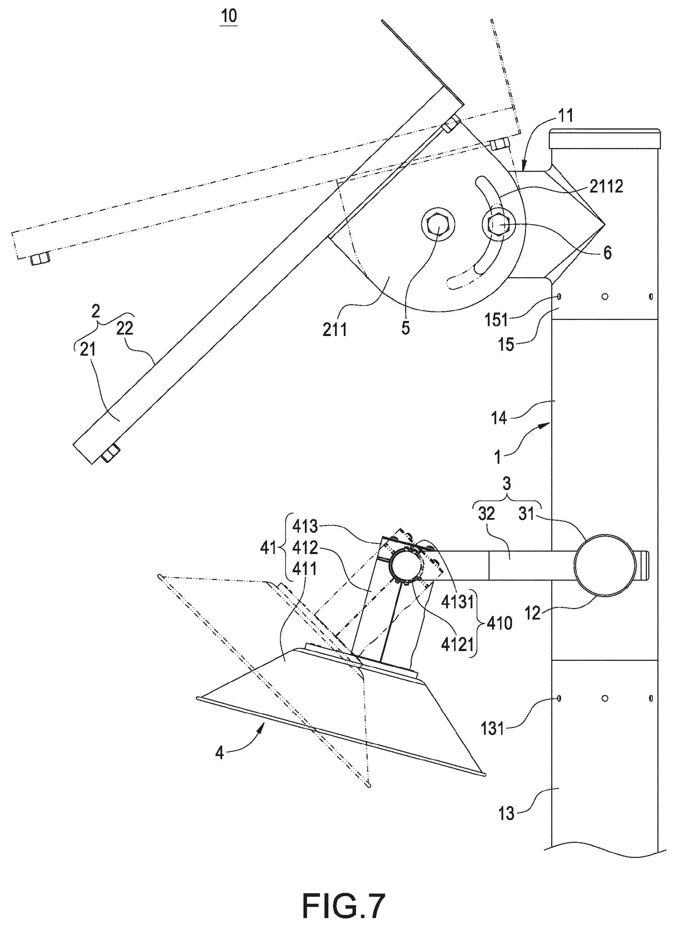

As shown from FIG. 1 to FIG. 9, the assembly of the solar-powered streetlamp structure 10 provided by the present invention is that: the main lamp frame 1 includes the top section 11 and is formed with the first pivotal hole 12; the solar power module 2 is disposed on the top section 11; the rotation unit 3 includes the transversal pipe 31 and the outwardly-protruding pipe 32, the transversal pipe 31 is pivoted in the first pivotal hole 12, the outwardly-protruding pipe 32 is connected to the transversal pipe 31, thereby enabling the angle of the outwardly-protruding pipe 32 to be adjusted with the transversal pipe 31 served as the axle core; the lamp unit 4 includes the lamp body 41 and the light source module 42, one end of the lamp body 41 is formed with the second pivotal hole 410, and another end thereof is disposed with the light source module 42, the lamp body 41 is pivoted with the outwardly-protruding pipe 32 via the second pivotal hole 410, thereby enabling the angle of the lamp body 41 to be adjusted with the outwardly-protruding pipe 32 served as the axle core. Accordingly, as shown in FIG. 7, the angle of the outwardly-protruding pipe 32 can be adjusted with the transversal pipe 31 served as the axle core, the angle of the lamp body 41 can be adjusted with the outwardly-protruding pipe 32 served as the axle core, so that the solar-powered streetlamp structure 10 is provided with advantages of dual-staged angle adjustment and illumination area adjustment, thereby increasing the illumination efficiency of the solar-powered streetlamp structure 10.

In addition, as shown from FIG. 7 to FIG. 9, the first receiving end 141 of the first rotary pipe 14 is received in the fixed rod 13 and capable of being rotated relative to the fixed rod 13, so that the lamp unit 4 is not only provided with advantages of dual-staged angle adjustment and illumination area adjustment, the lamp unit 4 can only be rotated 360 degrees with the fixed rod 13 served as the center, so as to adjust the illumination location of the lamp unit 4 for enlarging the illumination range of the solar-powered streetlamp structure 10.

Moreover, the second rotary pipe 15 is received in the second receiving end 142 and capable of being rotated relative to the first rotary pipe 14, so that the angle of the carrying rack 21 can be adjusted via the two arc-shaped elongated holes 2112 with the first screwing member 5 served as the axle core, and the solar panel 22 can also be adjusted via the carrying rack 21 and the second rotary pipe 15, thereby achieving the objectives of adjusting the elevation angle and the sunlight receiving area and location of the solar panel 22.

## Claims

1. A solar-powered streetlamp structure, comprising:
a main lamp frame (1), including a top section (11) and formed with a first pivotal hole (12);
a solar power module (2), disposed on the top section (11);
a rotation unit (3), including a transversal pipe (31) and an outwardly-protruding pipe (32), wherein the transversal pipe (31) is pivoted in the first pivotal hole (12), the outwardly-protruding pipe (32) is connected to the transversal pipe (31), thereby enabling the angle of the outwardly-protruding pipe (32) to be adjusted with the transversal pipe (31) served as an axle core; and
a lamp unit (4), including a lamp body (41) and a light source module (42), wherein one end of the lamp body (41) is formed with a second pivotal hole (410), another end thereof is disposed with the light source module (42), the lamp body (41) is pivoted with the outwardly-protruding pipe (32) via the second pivotal hole (410), thereby enabling the angle of the lamp body (41) to be adjusted with the outwardly-protruding pipe (32) served as an axle core.

2. The solar-powered streetlamp structure according to claim 1, wherein the main lamp frame (1) includes a fixed rod (13), a first rotary pipe (14) and a second rotary pipe (15), two ends of the first rotary pipe (14) are respectively extended with a first receiving end (141) and a second receiving end (142), the first receiving end (141) is received in the fixed rod (13) and capable of being rotated relative to the fixed rod (13), the second rotary pipe (15) is received in the second receiving end (142) and capable of being rotated relative to the first rotary pipe (14), the first pivotal hole (12) is formed on the first rotary pipe (14), and the top section (11) is formed on the second rotary pipe (15).

3. The solar-powered streetlamp structure according to claim 2, wherein the fixed rod (13) is formed with a plurality of first penetrated holes (131) corresponding to the first receiving end (141), and the second rotary pipe (15) is formed with a plurality of second penetrated holes (151) corresponding to the second receiving end (142).

4. The solar-powered streetlamp structure according to claim 2, wherein the solar power module (2) includes a carrying rack (21) and a solar panel (22), the carrying rack (21) is disposed on the top section (11), and the solar panel (22) is fastened on the carrying rack (21).

5. The solar-powered streetlamp structure according to claim 4, wherein the solar power module (2) further includes a storage cell (23), the storage cell (23) is disposed inside the first rotary pipe (14) or the second rotary pipe (15), and the storage cell (23) is electrically connected to the solar panel (22) and the light source module (42).

6. The solar-powered streetlamp structure according to claim 4, further including a first screwing member (5) and a second screwing member (6), the top section (11) includes an extension pipe (152) protruded from the second rotary pipe (15), the extension pipe (152) is formed with a first lock hole (1521) and a second lock hole (1522), the carrying rack (21) includes two fastening sheets (211) disposed at two sides of the extension pipe (152), the fastening sheet (211) is formed with a third lock hole (2111) and an arc-shaped elongated hole (2112), the first screwing member (5) is screwed in the first lock hole (1521) and the third lock holes (2111), the second screwing member (6) is screwed in the second lock hole (1522) and the two arc-shaped elongated holes (2112), thereby enabling the angle of the carrying rack (21) to be adjusted via the two arc-shaped elongated holes (2112) with the first screwing member (5) served as an axle core.

7. The solar-powered streetlamp structure according to claim 1, wherein the lamp body (41) includes a lamp seat (411), a first clamping member (412) and a second clamping member (413), one end of the first clamping member (412) is connected to the lamp seat (411), another end thereof is formed with a first recess (4121), one end of the second clamping member (413) is formed with a second recess (4131), the second pivotal hole (410) is defined by the first recess (4121) and the second recess (4131), so that the outwardly-protruding pipe (32) is clamped between an inner wall of the first recess (4121) and an inner wall of the second recess (4131), and the light source module (42) is disposed in the lamp seat (411).

8. The solar-powered streetlamp structure according to claim 7, wherein the lamp body (41) further includes a non-skid sleeve (414) disposed and clamped between the first clamping member (412), the second clamping member (413) and the outwardly-protruding pipe (32).

9. The solar-powered streetlamp structure according to claim 8, wherein the non-skid sleeve (414) is formed with a concave slot (4141) and includes two protruding sheets (4142) and two annular convex segments (4143), the two protruding sheets (4142) are formed through being extended from two sides defined on a bottom wall of the concave slot (4141), the two annular convex segments (4143) are formed at the left and the right sides of the non-skid sleeve (414), the first clamping member (412) and the second clamping member (413) are both mounted in the concave slot (4141), the two protruding sheets (4142) are clamped between the first clamping member (412) and the second clamping member (413), and the two annular convex segments (4143) are exposed at the exteriors of the first clamping member (412) and the second clamping member (413).

10. The solar-powered streetlamp structure according to claim 9, wherein the lamp body (41) further includes a plurality of screws (415), the first clamping member (412) is formed with a plurality of first through holes (4122), the second clamping member (413) is formed with a plurality of second through holes (4132), the protruding sheet (4142) is formed with a plurality of third through holes (41421), and the screws (415) are screwed in the first through holes (4122), the second through holes (4132) and the third through holes (41421).

11. The solar-powered streetlamp structure according to claim 9, wherein the lamp body (41) further includes two insertion pins (416), the two insertion pins (416) are inserted in the outwardly-protruding pipe (32) and positioned corresponding to the outer sides of the two annular convex segments (4143).

12. The solar-powered streetlamp structure according to claim 9, wherein the lamp body (41) further includes two abutting screw rods (417), the first clamping member (412) is formed with a first screw hole (4123) corresponding to the non-skid sleeve (414), the second clamping member (413) is formed with a second screw hole (4133) corresponding to the non-skid sleeve (414), one of the abutting screw rods (417) is screwed in the first screw hole (4123), the other abutting screw rod (417) is screwed in the second screw hole (4133), and the bottom ends of the abutting screw rods (417) are abutted against the non-skid sleeve (414).

13. The solar-powered streetlamp structure according to claim 9, wherein the outwardly-protruding pipe (32) is formed as a U-shaped pipe, two ends of the outwardly-protruding pipe (32) are respectively fastened with two ends of the transversal pipe (31), the shape of the outwardly-protruding pipe (32) is formed in a cylindrical status, the shape of the first recess (4121) and that of the second recess (4131) are respectively formed in a semi-circular status, the non-skid sleeve (414) is formed in a tubular status, and the protruding sheet (4142) is formed in a semi-arced status.
